# EUROPEAN PATENT SPECIFICATION

(11) **EP 0 775 853 B1**
(45) Date of publication and mention of the grant of the patent: **17.04.2002**
(21) Application number: 96118206.0
(22) Date of filing: 13.11.1996
(51) Int. Cl.: F16H 37/08

(54) **Continuously variable transmission**
Stufenlos regelbares Getriebe
Transmission continue de vitesse

(30) Priority: 24.11.1995 JP 30615595
(43) Date of publication of application: 28.05.1997
(73) Proprietor: AISIN AW CO., LTD., Anjo-shi Aichi-ken 444-11 (JP)
(72) Inventor: Taniguchi, Takao, Anjo-shi, Aichi-ken, 444-11 (JP); Miyagawa, Shoichi, Anjo-shi, Aichi-ken, 444-11 (JP); Tsukamoto, Kazumasa, Anjo-shi, Aichi-ken, 444-11 (JP); Sakakibara, Shiro, Anjo-shi, Aichi-ken, 444-11 (JP); Inuzuka, Takeshi, Anjo-shi, Aichi-ken, 444-11 (JP); Hattori, Masashi, Anjo-shi, Aichi-ken, 444-11 (JP); Terashima, Takao, Anjo-shi, Aichi-ken, 444-11 (JP)
(74) Representative: VOSSIUS & PARTNER

(56) References cited:
- EP-A- 0 064 678
- EP-A- 0 733 829
- GB-A- 1 603 633
- US-A- 3 340 749
- US-A- 4 589 303
- US-A- 4 950 213
- US-A- 5 183 444
- US-A- 5 203 233

## Description

The invention relates to a continuously variable transmission using a belt type continuously variable transmission, in which a belt is made to run on a first (primary) pulley and a second (secondary) pulley each having two sheaves and, more particularly, to an arrangement/construction in a continuously variable transmission which is suitable if used as a transmission in an automobile and which is made by combining the belt type continuously variable transmission, a synchronous transmission and a planetary gear.

In recent years, an automatic continuously variable transmission having the belt type continuously variable transmission is noted as the transmission for the automobile for demands of the improvements in the fuel consumption rate and in the drivability.

As this continuously variable transmission, there has been proposed in the prior art the continuously variable transmission which comprises a belt type continuously variable transmission, a synchronous transmission, a planetary gear for synthesizing and outputting the rotations of those continuously variable transmission and synchronous transmission, a low clutch for changing the speed including an RPM 0 on the basis of the torque circulation by the planetary gear, and a high clutch for actuating only the belt type continuously variable transmission, so that a non-stage speed change from the reverse gear stage to the high forward gear stage can be provided, as disclosed in JP-A-188841/1987 and JP-A-331000/1994.

In the continuously variable transmission, however, the belt type continuously variable transmission, the synchronous transmission, the planetary gear, the low clutch and the high clutch are so arranged on the first shaft and the second shaft as not to overlap one another in the axial direction. Especially, the belt type continuously variable transmission has an axially elongated construction, because a relatively long hydraulic actuator is arranged on the back of the movable sheave arranged at the right and left sides across the belt for the primary pulley and the secondary pulley, so that an axially long mounting stage is required as a whole.

This makes it difficult for the mounting space of the F/F (i.e., front engine/front drive) type, i.e., the axially restricted mounting space to match the axially elongated continuously variable transmission.

US-A-4,589-303 discloses a continuously variable transmission with synchronous shift according to the preamble of claim 1. It includes an input, an output, a fixed-ratio drive mechanism and a variator in driven relationship with the input, a planetary gear assembly having a sun gear, a ring gear, a carrier, and a plurality of planet gears, a first clutch for engaging the variator selectively with the sun and ring gears, a second clutch for engaging the mechanism selectively with the carrier and sun gear and for disengaging the mechanism therefrom, and a third clutch for engaging the ring gear and carrier selectively with the output. This known CVT, however, does not comprise a damper unit on a first shaft axially overlapping an hydraulic actuator of a second pulley on a second shaft.

US-A-5,183,444 relates to a continuously variable transmission. It includes an input shaft, a variable speed drive pulley on the input shaft, a driven shaft, a variable speed driven pulley on the driven shaft and a v-belt trained around the pulleys. A drive sprocket driven by the drive shaft and a driven sprocket with a silent chain trained around them provides a speed reduction drive. The driven sprocket drives a sun gear which drives planet gears that mesh with a stationary ring gear.

It is, therefore, an object of the invention to provide a continuously variable transmission which is enabled to make a compact structure especially in the axial direction thereby to solve the above-specified problems by making effective use of the space based upon the aforementioned relatively long hydraulic actuator.

This object in achieved with the features of the claims. A continuously variable transmission as described comprises:
a belt type continuously variable transmission including; a first pulley arranged on a first shaft and having a stationary sheave , a movable sheave and a hydraulic actuator arranged at the back of said movable sheave;
a second pulley arranged on a second shaft and having a stationary sheave, a movable sheave and a hydraulic actuator arranged at the back of said movable sheave; and a belt made to run on said first and second pulleys;
a synchronous transmission for connecting a first rotary member arranged on said first shaft and a second rotary member arranged on said second shaft at a constant speed ratio;
an output gear for transmitting a power to wheels; and
a planetary gear arranged on said second shaft and including at least first, second and third rotary elements for connecting said first rotary element to said second rotary member, said second rotary element to said second pulley , and said third rotary element to said output gear,
wherein said first shaft is connected through said belt type continuously variable transmission to said second rotary element and through said synchronous transmission to said first rotary element,
wherein the hydraulic actuator of said first pulley and the hydraulic actuator of said second pulley are arranged in different positions of the axial direction across said belt, and
wherein said planetary gear and said output gear are arranged to axially overlap the hydraulic actuator of said first pulley on said second shaft between said synchronous transmission and said second pulley.

In the invention, the power from the engine is inputted directly to said first shaft through a damper unit for absorbing the fluctuation of the torque of said engine, and said damper unit is arranged to axially overlap the hydraulic actuator of said second pulley on said first shaft and at the engine side of the stationary sheave of said first pulley.

In the invention, there is further comprised an oil pump driven by the power from said engine for producing an oil pressure to be fed to the hydraulic actuators of said first and second pulleys, and said oil pump is arranged on said first shaft between said damper unit and the stationary sheave of said first pulley.

In the invention, there is further comprised a first clutch interposed between said first shaft and the first rotary member of said synchronous transmission for transmitting/blocking the power, and said first clutch is arranged on said first shaft at the axial outer side of said first rotary member.

In the invention, said synchronous transmission includes a sprocket forming said first rotary member, a sprocket constructing said second rotary member and a chain made to run on said two sprockets.

In the invention, said planetary gear is a simple planetary gear, and said first rotary element is a carrier, said second rotary element is a sun gear, and said third rotary element is a ring gear.

In the invention, there is further comprised a second clutch interposed between said sun gear and said ring gear for transmitting/blocking the power, said second clutch is arranged on said second shaft between said planetary gear and said output gear.

In the invention, the hydraulic actuators of said first pulley and said second pulley individually have first oil chambers and second oil chambers arranged axially in series for exerting a pushing force on said movable sheave.

In the invention, there is further comprised a differential unit, a third shaft extending from said differential unit and having left and right front axles, and a fourth shaft having a counter shaft interposed between said output gear and said differential unit, the lines joining said first, second, third and fourth shafts forms a deformed quadrilateral, as viewed in side elevation, and said second shaft, said fourth shaft, said first shaft and said third shaft are arranged consecutively in the recited order downward.

In the invention, the boss portion of the stationary sheave of said second pulley is rotatably supported through a bearing by a case member, and said output gear is rotatably supported on the boss portion of said stationary sheave through a bearing.

On the basis of the construction thus made, in the low mode in which the first clutch is applied whereas the second clutch is released, the rotation of the first shaft (or input shaft), as transmitted from the engine output through the damper unit, is transmitted through the belt type continuously variable transmission (CVT) to the second rotary element (or sun gear) of the planetary gear on the second shaft and through the first clutch and the synchronous transmission to the first rotary element (or carrier) of the planetary gear. Moreover, the rotations of the first rotary element and the second rotary element are synthesized in the planetary gear and outputted from the third rotary element (or ring gear) to the output gear. At this time, a torque inversion is established so that the rotation of the output gear is speed-changed forward and backward across the neutral on the basis of the speed change of the CVT. By setting the difference between the axial forces of the two hydraulic actuators of the first pulley and the second pulley within a predetermined range, moreover, the speed ratio of the CVT is automatically converged to establish the neutral position in which the rotation of the output gear is at 0.

In the high mode in which the first clutch is released whereas the second clutch is applied, on the other hand, the rotation of the first shaft is transmitted through the CVT to the second shaft and further through the planetary gear, as integrally rotated by the application of the second clutch, to the output gear . At this time, the rotation of the output gear is speed-changed by suitably changing the speed of the CVT.

Incidentally, the aforementioned first, second and third shafts imply the concepts of the shaft arranged in the predetermined positions but should not define the shaft themselves specifically. For example, the first shaft is conceived to include the shaft and the stationary sheave of the first pulley. Likewise, the second shaft is conceived to include the stationary sheave of the second pulley.

The invention will be described with reference to the drawings in which:
Fig. 1 is a sectional front elevation showing a continuously variable transmission according to the invention;
Fig. 2 is a side elevation of the same;
Fig. 3 is a speed diagram of the same;
Fig. 4 is a diagram showing the applied states of individual clutches;
Fig. 5 is a diagram illustrating the change in the output torque relating to the torque ratio of the belt type continuously variable transmission (CVT); and
Fig. 6 is a diagram illustrating the change in the output RPM relating to the torque ratio of the CVT.

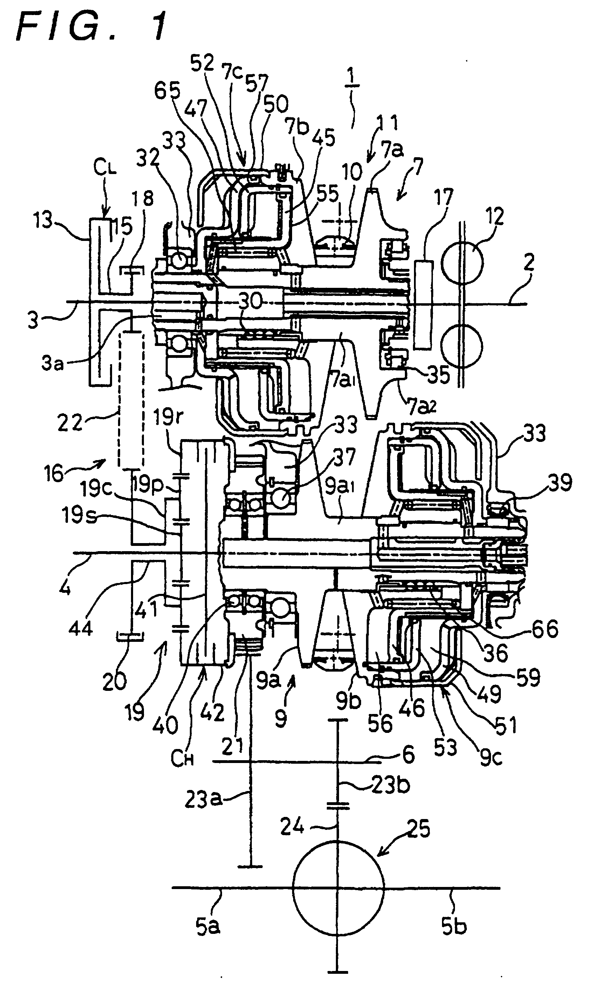

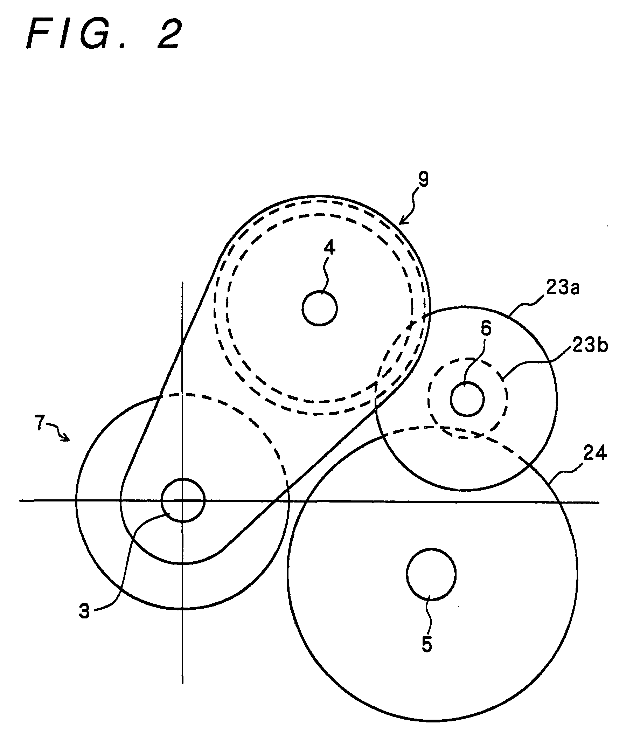

The invention will be described in connection with its modes of embodiment with reference to the accompanying drawings. A vehicular automatic continuously variable transmission 1 is equipped, as shown in Figs. 1 and 2, with first and second shafts 3 and 4 arranged in lines with an engine crankshaft 2, a third shaft 5 (5a and 5b) arranged in line with the front axle, and a fourth shaft 6 made of a counter shaft. A primary (or first) pulley 7 is arranged on the first shaft 3, and a secondary (or second) pulley 9 is arranged on the second shaft 4. A belt 10 is made to run on these two pulleys 7 and 9 to form a belt type continuously variable transmission 11.

Moreover, the first shaft 3 is connected directly to the engine crankshaft 2 through a damper unit 12 for absorbing the torque fluctuation of the engine, and this input shaft 3 is constructed of a stationary sheave 7a of the primary pulley 7, and a shaft 3a splined to the boss portion 7a₁ of the stationary sheave 7a. On the shaft 3a constructing the input shaft 3, moreover, there is fixed an input side member 13 of a low clutch C_{L}, and there is rotatably supported an output side member 15 of the same. To this output side member 15, there is integrally connected a primary side sprocket 18 which constructs a synchronous transmission 16. On the other hand, an oil pump 17 is connected to the stationary sheave 7a of the primary pulley 7 constructing the input shaft 3, and a movable sheave 7b is axially movably supported by the stationary sheave 7a by a later-described hydraulic actuator 7c.

The second shaft 4 is constructed of a stationary sheave 9a of the secondary pulley 9, on which is axially movably supported a movable sheave 9b by a hydraulic actuator 9c. On the second shaft 4, moreover, there are arranged a high clutch C_{H} and a planetary gear 19, and there are rotatably supported a secondary side sprocket 20 and an output gear 21.

The planetary gear 19 is constructed of a single pinion planetary gear which has a sun gear 19s, a ring gear 19r, and a carrier 19c rotatably supporting a pinion 19p meshing with those two gears. Moreover, the sun gear 19s is connected to the stationary sheave 9a of the secondary pulley 9 constructing the second shaft 4, to construct a second rotary element; the ring gear 19r is connected to the output gear 21 to construct a third rotary element; and the carrier 19c is connected to the secondary side sprocket 20 to construct a first rotary element. On the primary and secondary side sprockets 18 and 20, on the other hand, there is wound a winding member 22 such as a chain, e.g., a roller chain or a timing belt. Moreover, the high clutch C_{H} is interposed between the sun gear 19s and the ring gear 19r.

On the other hand, the output gear 21 meshes with a larger gear 23a of the counter shaft 6 constructing the fourth shaft, and a small gear 23b of the same shaft meshes with a ring gear 24 of a differential unit 25. This differential unit 25 outputs differential rotations individually to the left and right axles 5a and 5b constructing the third shaft.

The arrangement/construction of the vehicular automatic continuously variable transmission 1 will be described in more detail.

On the boss portion 7a₁ of the stationary sheave 7a of the primary pulley 7, there is axially movably supported through a ball spline 30 the movable sheave 7b. At the back of this movable sheave 7b, moreover, there is arranged the later-described hydraulic actuator 7c. At the same time, the boss portion 7a₁ at the rear end side (as located apart from the engine crankshaft 2) of the actuator 7c is rotatably supported through a (ball) bearing 32 on a case 33. On the other hand, the stationary sheave 7a has at its back a flange portion 7a₂, which rotatably supports the stationary sheave 7a in its inner circumference through a (roller) bearing 35. As a result, the primary pulley 7 is supported between the two bearings 32 and 35.

On the first shaft 3, there is arranged the oil pump 17 which is interposed between the damper unit 12 and the stationary sheave 7a of the primary pulley 7. At the back end of the primary pulley 7 across the bearing 32, there is arranged the primary side sprocket 18 of the synchronous transmission 16. The low clutch C_{L} is arranged at the back end of the sprocket 18. As a result, there are arranged on the first shaft 3 the damper unit 12, the oil pump 17, the stationary sheave 7a, the movable sheave 7b and the hydraulic actuator 7c of the primary pulley 7, the bearing 32, the primary side sprocket 18 and the low clutch C_{L} in the consecutive order, as recited, in the axial direction from the engine (or base end) side.

On the boss portion 9a₁ of the stationary sheave 9a of the secondary pulley 9, on the other hand, there is axially movably through a ball spline 36 the movable sheave 9b, which is backed by the later-described hydraulic actuator 9c. In the secondary pulley 9, moreover, a (ball) bearing 37 is mounted on the outer circumference of the boss portion at the back of the stationary sheave 9a, and a (roller) bearing 39 is mounted on outer circumference of the boss portion at the back of the hydraulic actuator 9c. The secondary pulley 9 is supported on the case 33 between those bearings 37 and 39. Incidentally, the primary pulley 7 and the secondary pulley 9 have an inverted relation between the axial positions of their stationary sheaves and movable sheaves across the belt 10. In the secondary pulley 9, therefore, the movable sheave 9b and the hydraulic actuator 9c at the back of the former are arranged at the base end (or engine) side, and the stationary sheave 9a is arranged at the leading end side.

On the second shaft, moreover, there is rotatably supported the output gear 21 through a (ball) bearing 40 at the leading end side across the bearing 37 of the stationary sheave 9a. At the leading end side of the output gear 21, there is arranged the high clutch C_{H} which is constructed of an input side member 41 fixed on the stationary sheave 9a of the secondary pulley 9 constructing the second shaft 4 and an output side member 42 fixed on the output gear 21. At the more leading end side, there is arranged the planetary gear 19. At the more leading end side, there is rotatably supported a hollow intermediate shaft 44 which connects the secondary side sprocket 20 of the synchronous transmission 16 and the carrier 19c of the planetary gear 19. As a result, on the second shaft 4, there are arranged the hydraulic actuator 9c, the movable sheave 9b, the stationary sheave 9a, the output gear 21, the high clutch C_{H}, the planetary gear 19, and the secondary side sprocket 20 of the synchronous transmission in the consecutive order in the axial direction from the engine (or base end) side toward the rear end.

On the other hand, the hydraulic actuators 7c and 9c of the primary pulley 7 and the secondary pulley 9 are individually equipped with partition members 45 and 46 and cylinder members 47 and 49 fixed on the stationary sheave boss portions 7a₁ and 9a₁, and drum members 50 and 51 and second piston members 52 and 53 fixed on the backs of the movable sheaves 7b and 9b. The partition members 45 and 46 are fitted oil-tight on the second piston members 52 and 53, which in turn are fitted oil-tight on the cylinder members 47 and 49 and the partition members 45 and 46, to construct a double-piston structure composed of first oil pressure chambers 55 and 56 and second oil pressure chambers 57 and 59.

In the first oil pressure chambers 55 and 56 in the hydraulic actuators 7c and 9c, moreover, the backs of the individual movable sheaves 7b and 9b construct the piston faces, the effective pressure receiving areas are equal at the primary side and at the secondary side. On the other hand, the primary and secondary side stationary sheave boss portions 7a₁ and 9a₁ are individually formed with oil passages communicating with the first oil pressure chambers 55 and 56 and the second oil pressure chambers 57 and 59 and are equipped with pre-loading springs 65 and 66 under compression for urging the primary and secondary side movable sheaves 7b and 9b toward the stationary sheaves 7a and 9a.

As shown in Fig. 1, moreover, the damper unit 12 and the oil pump 17 on the first shaft 3 are arranged to axially overlap the hydraulic actuator 9c of the secondary pulley 9 arranged on the second shaft. On the other hand, the planetary gear 19, the high clutch C_{H} and the output gear 21, as arranged on the second shaft between the secondary side sprocket 20 of the synchronous transmission and the stationary sheave 9a, are arranged to axially overlap the hydraulic actuator 7c of the primary pulley 7 arranged on the first shaft 3.

As shown in Fig. 2, on the other hand, the plane joining the first shaft 3, the second shaft 4, the third shaft 5 and the fourth shaft 6 forms a deformed quadrilateral, as seen in a side elevation, and the second shaft 4, the fourth shaft 6, the first shaft 3 and the third shaft 5 are arranged consecutively downward.

Next, the operations based upon the continuously variable transmission 1 will be described with reference to Figs. 1, 3 and 4. The rotation of the engine crankshaft 2 is transmitted through the damper unit 12 to the input shaft 3. In the low mode of the D-range, in which the low clutch C_{L} is applied whereas the high clutch C_{H} is released, the rotation of the input shaft 3 is transmitted to the primary pulley 7 and to the carrier 19c of the planetary gear 19 through the synchronous transmission 16 which is composed of the primary side sprocket 18, the winding member 22 and the secondary side sprocket 20. On the other hand, the rotation of the primary pulley 7 is speed-changed at a non-stage as a result that the pulley ratio of the primary and secondary pulleys is suitably adjusted by the later-described hydraulic actuators 7c and 9c, so that it is transmitted to the secondary pulley 9 , the speed-changed rotation of which is further transmitted to the sun gear 19s of the planetary gear 19.

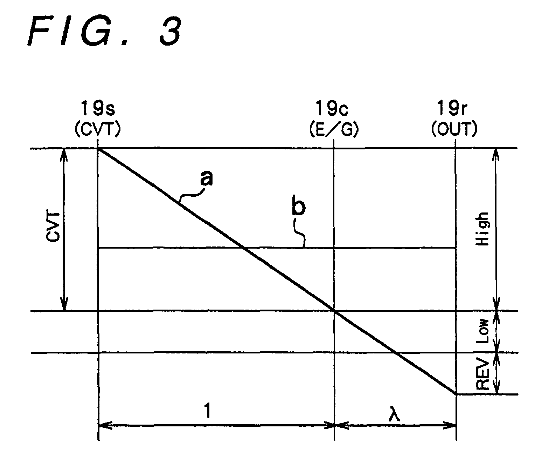

In the planetary gear 19, as illustrated as a speed diagram in Fig. 3, the carrier 19c, to which is transmitted the synchronous rotation through the synchronous transmission 16, acts as a reaction element so that the continuously variable rotation from the belt type continuously variable transmission (CVT) is transmitted to the sun gear 19s. The rotations of these carrier and sun gear are synthesized and transmitted to the output gear 21 through the ring gear 19r. Since, at this time, the ring gear 19r or a rotary element other than the reaction supporting element is connected to the output shaft 5, the planetary gear 19 inverts the torque, and the sun gear 19s and the carrier 19c rotate in the same direction, so that the output shaft rotates forward (Lo) and backward (Rev) across the zero rotation. In the belt type continuously variable transmission 11, on the base of the torque circulation, the torque is transmitted from the secondary pulley 9 to the primary pulley 7 during the driving (forward) rotating state of the output shaft 5 and from the primary pulley 7 to the secondary pulley 9 during the reverse (or backward) rotation of the output shaft.

In the high mode in which the low clutch C_{L} is released whereas the high clutch C_{H} is connected, moreover, the transmission through the synchronous transmission 16 to the planetary gear 19 is interrupted so that the planetary gear 19 is integrally rotated with the high clutch C_{H} applied. As a result, the rotation of the input shaft 3 is transmitted to the output gear 21 exclusively through the belt type continuously variable transmission (CVT) 11 and the high clutch C_{H}. Specifically, the CVT 11 transmits the power from the primary pulley 7 to the secondary pulley 9. Moreover, the rotation of the output gear 21 is transmitted through the gears 23a and 23b of the counter shaft 6 to the differential unit 25 and further through the left and right axles 5a and 5b to the left and right front wheels.

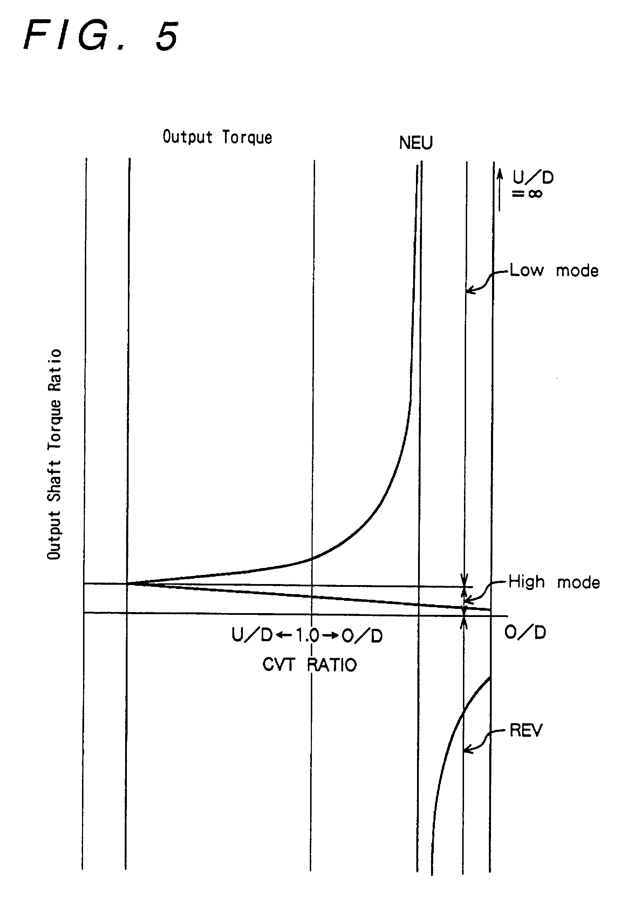

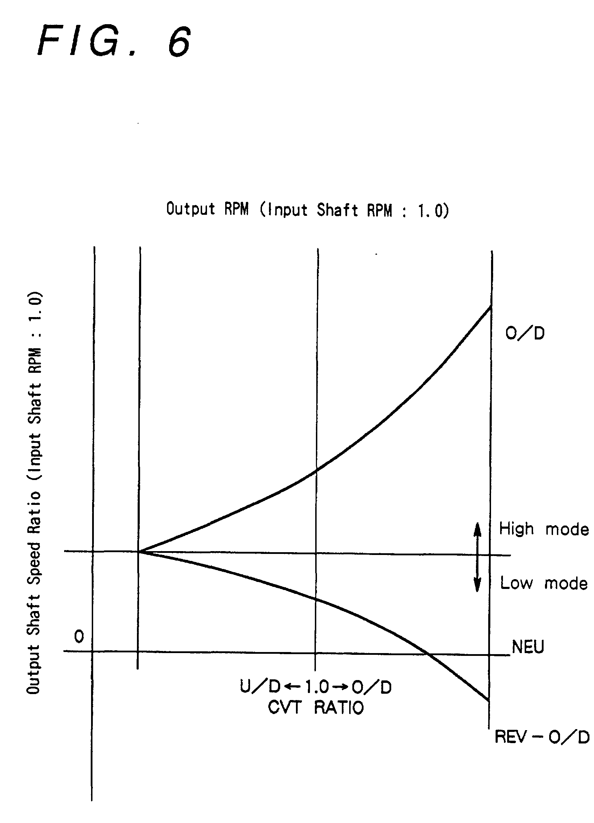

In the low mode, as illustrated in the speed diagram of Fig. 3, the output torque diagram of Fig. 5 and the output RPM diagram of Fig. 6, if the belt type continuously variable transmission (as will be shortly referred to as the "CVT") 11 is at the limit of acceleration (at an O/D end) (as indicated by the position of line a of Fig 3), the sun gear 19s rotates to the maximum so that the ring gear 19r rotates backward of the rotation of the carrier 19c at a constant RPM to transmit the reverse rotation (REV) to the output gear 21. When the CVT 11 changes its speed in the decelerating (U/D) direction, the RPM of the reverse rotation decreases until a neutral position (NEU), in which the RPM of the output gear 21 is at 0, is taken at a predetermined pulley ratio which is determined by the gear ratio between the planetary gear 19 and the synchronous transmission 16. When the CVT 11 changes its speed in the decelerating direction, the ring gear 19r is switched to the forward direction so that the rotation in the driving or forward direction is transmitted to the output gear 21. At this time, as apparent from Fig. 5, the torque of the output gear 21 diverges to infinity in the vicinity of the neutral position NEU.

When the CVT 11 comes to the end of the decelerating direction (U/D), the high clutch C_{H} is applied to switch the mode to the high mode. In this high mode, the output rotation of the CVT 11 is transmitted as it is to the output gear 21 so that a parallel line b appears in the speed diagram of Fig. 3. As the CVT 11 is speed-changed in the accelerating (O/D) direction, the rotation of the output gear 21 is then changed into the accelerating direction so that the transmission torque is accordingly lowered. Incidentally, letter 1 appearing in Fig. 3 designates the ratio (Zs/Zr) between the tooth number Zs of the sun gear and the tooth number Zr of the ring gear.

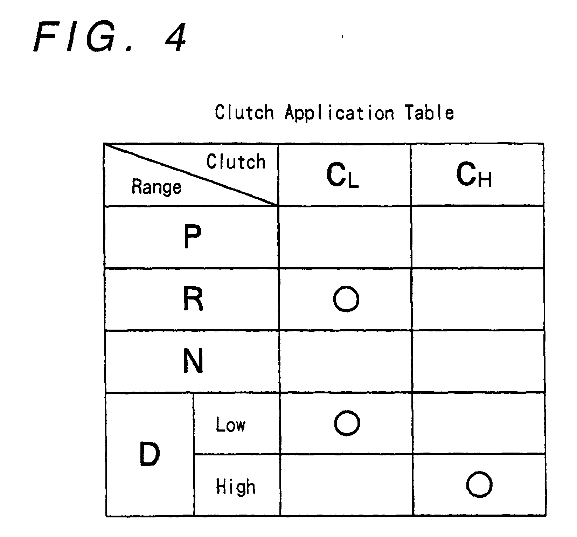

Incidentally, in a parking range P and a neutral range N shown in Fig. 4, both the low clutch C_{L} and the high clutch C_{H} are released so that the power from the engine is blocked. At this time, in the parking range P, the differential unit 25 is locked to lock the axles 5a and 5b.

In the low mode of the D-range, on the other hand, the oil pressure based on the oil pump 17 is fed to the hydraulic servo for the low clutch C_{L} to apply the low clutch C_{L}. In the CVT 11, moreover, the axial force by the secondary side hydraulic actuator 9c, in which the oil pressure acts on both the first and second oil pressure chambers 56 and 59, becomes higher than that by the primary side hydraulic actuator 7c, in which the oil pressure acts on only the first oil pressure chamber 55. In the axial force state of the two pulleys 9 and 7, as corresponding to the torque transmission from the secondary pulley 9 to the primary pulley 7, a ratio control valve is suitably controlled to adjust the oil pressure in the second oil pressure chamber 59 of the secondary hydraulic actuator 9c so that the axial force of the hydraulic actuator 7c is suitably adjusted to change the pulley ratio (or torque ratio) suitably. In this state, the engine torque to be transmitted from the input shaft 3 through the low clutch C_{L} and the synchronous transmission 16 to the carrier 19c of the planetary gear 19 is extracted through the sun gear 19s, while being regulated at the predetermined pulley ratio by the CVT 11, through the ring gear 19r from the output gear 21.

In the high (H) mode of the D-range, on the other hand, the predetermined oil pressure, as based on the oil pump 17, is fed to the first and second oil pressure chambers 55 and 57 of the primary side hydraulic actuator 7c, to the first oil pressure chamber 56 of the secondary side hydraulic actuator 9c and further to the hydraulic servo for the high clutch. Specifically, in the high mode, the D-range position is taken as in the foregoing low mode, and the high clutch C_{H} is applied. In the CVT 11, moreover, the axial force by the primary side hydraulic actuator 7c, in which the oil pressure is fed to the first and second oil pressure chambers 55 and 57, becomes stronger than that by the secondary side hydraulic actuator 9c, in which the oil pressure is fed to only the first oil pressure chamber 56. In the axial force state, as corresponding to the torque transmission from the primary pulley 7 to the secondary pulley 9, the ratio control valve is suitably controlled to adjust the oil pressure in the second oil pressure chamber 57 of the primary hydraulic actuator 7c so that the axial force of the hydraulic actuator 7c is suitably adjusted to produce the suitable pulley ratio (or torque ratio) suitably. In this state, the torque, as transmitted from the engine to the input shaft 3, is suitably changed by the CVT 11, in which the torque is transmitted from the primary pulley 7 to the secondary pulley 9, until it is extracted through the high clutch C_{H} from the output gear 21.

In the reverse range (R), the predetermined oil pressure is fed to the first and second oil pressure chambers 55 and 57 of the primary side hydraulic actuator 7c, to the first oil pressure chamber 56 of the secondary side hydraulic actuator 9c and further to the hydraulic servo for the low clutch. As a result, the low clutch C_{L} is applied. In the CVT 11, moreover, the axial force by the primary side hydraulic actuator 7c, in which the oil pressure is fed to the first and second oil pressure chambers 55 and 57, becomes stronger than that by the secondary side hydraulic actuator 9c, in which the oil pressure is fed to only the first oil pressure chamber 56. In the axial force state, as corresponding to the torque transmission from the primary pulley 7 to the secondary pulley 9, the ratio control valve is suitably controlled to adjust the oil pressure in the second oil pressure chamber 57 of the primary hydraulic actuator 7c so that the axial force of the hydraulic actuator 7c is suitably adjusted to produce the suitable pulley ratio (or torque ratio) suitably. In this state, the pulley ratio of the CVT 11 is in a predetermined accelerating (O/D) state, and the engine torque from the input shaft 3 is transmitted through the low clutch C_{L} and the synchronous transmission 16 to the carrier 19c of the planetary gear 19 and further through the CVT 11, in which the torque is transmitted from the primary pulley 7 to the secondary pulley 9, to the sun gear 19s so that the two torques are synthesized in the planetary gear 19 and extracted as the reverse rotation at the output gear 21 through the ring gear 19r.

In the continuously variable transmission 1, the power is transmitted from the engine output shaft 2 directly to the input shaft 3 through only the damper unit 12 so that the starter unit, as required in the prior art, such as the torque converter, the fluid coupling, the electromagnetic clutch or the input clutch can be dispensed with. In the D range, therefore, there is required the neutral control in which the continuously variable transmission 1 automatically comes into the neutral when the vehicle stops.

In this neutral control, the axial forces of the primary pulley 7 and the secondary pulley 9 are controlled to substantially equal values. Alternatively, at least the difference between the axial forces of the primary and secondary pulleys is made smaller either than the difference between the axial forces of the two pulleys, as determined from the input torque of the CVT and the pulley ratio at the instant when the output torque is positive, by a small value within such a range as not to invert the magnitude relation, or than the difference between the axial forces of the primary and secondary pulleys, as determined from the input torque of the CVT and the pulley ratio at the instant when the output torque is negative, by a small value within such a range as not to invert the magnitude relation. Specifically, the oil pressures of the second oil pressure chambers 57 and 59 are released to equalize the axial forces of the two pulleys 7 and 9 while the oil pressures are being fed to the two first oil pressure chambers 55 and 56 of the primary and secondary hydraulic actuators 7c and 9c.

Incidentally, the neutral control, i.e., the control in which the CVT 11 is self-converged into the neutral state by confining the difference between the axial forces of the primary and secondary side hydraulic actuators 7c and 9c within the predetermined range, is disclosed in detail in Japanese Patent Application No. 66234/1995 or 128701/1995.

According to the invention, the planetary gear and the output gear are arranged in the space on the second shaft, as defined by the hydraulic actuator of the first pulley having a relatively long construction in the axial direction, the synchronous transmission and the belt, so that the space can be effectively used to provide a compact structure, i.e., an axially compact continuously variable transmission.

According to the invention, the damper unit is arranged in the space on the first shaft, as defined by the hydraulic actuator of the second pulley having a relatively long construction in the axial direction, the engine and the belt, and the power from the engine is transmitted directly to the first shaft (or input shaft) not through any starter unit, so that the space can be effectively used to provide a compact structure, i.e., an axially compact size while a large space was required in the prior art for the starter unit.

According to the invention, the oil pump is arranged in the space on the first shaft, as defined by the hydraulic actuator of the second pulley, the belt and the damper unit, so that the space can be effectively used to provide an axially compact size.

According to the invention, the continuously variable transmission can be made compact by the rational arrangement in which the lengths of the first shaft and the second shaft are balanced.

According to the invention, the hydraulic actuators of the first pulley and the second pulley have the double-piston structure so that they can produce high axial forces, as demanded, despite of its small size. At the same time, the difference between the axial forces to act on the first and second pulleys can be easily held within a predetermined range to hold the neutral state thereby to make the continuously variable transmission compact and to improve the reliability.

According to the invention, of the first, second and fourth shafts, the first shaft having a relatively long structure is arranged in a lower position so that it may be prevented from interfering with a reinforcing side member in the front portion of the car body, thereby to improve the vehicular mountability especially for an F/F vehicle.

According to the invention, the bearing of the end portion of the second shaft and the bearing of the output gear and the synchronous transmission can be given a two-storied structure to shorten the second shaft.

## Claims

1. A continuously variable transmission comprising:
a) a belt type continuously variable transmission (11) including: a first pulley (7) arranged on a first shaft (3) and having a stationary sheave (7a), a movable sheave (7b) and a hydraulic actuator (7c) arranged at the back of said movable sheave (7b); a second pulley (9) arranged on a second shaft (4) and having a stationary sheave (9a), a movable sheave (9b) and a hydraulic actuator (9c) arranged at the back of said movable sheave (9b); and a belt (10) made to run on said first (7) and second (9) pulleys;
b) a synchronous transmission (16) for connecting a first rotary member (18) arranged on said first shaft (3) and a second rotary member (20) arranged on said second shaft (4) at a constant speed ratio;
c) an output gear (21) for transmitting a power to wheels;
d) a planetary gear (19) arranged on said second shaft (4) and including at least first, second and third rotary elements for connecting said first rotary element (19c) to said second rotary member (20), said second rotary element (19s) to said second pulley (9), and said third rotary (19r) element to said output gear (21),
e) wherein said first shaft (3) is connected through said belt type continuously variable transmission (11) to said second rotary element (19s) and through said synchronous transmission (16) to said first rotary element (19c),
f) wherein the hydraulic actuator (7c) of said first pulley (7) and the hydraulic actuator (9c) of said second pulley (9) are arranged in different positions of the axial direction across said belt (10),
g) wherein said planetary gear (19) and said output gear (21) are arranged on said second shaft (4) between said synchronous transmission (16) and said second pulley (9) to axially overlap the hydraulic actuator (7c) of said first pulley (7), **characterized in that**
h) a damper unit (12) for absorbing the fluctuation of the torque of an engine is arranged at the engine side of the stationary sheave (7a) of said first pulley (7) on said first shaft (3) to axially overlap the hydraulic actuator (9c) of said second pulley (9).

2. A continuously variable transmission according to claim 1, wherein the power from said engine is inputted directly to said first shaft (3) through said damper unit (12).

3. A continuously variable transmission according to claim 1 or 2 further comprising an oil pump (17) driven by the power from said engine for producing an oil pressure to be fed to the hydraulic actuators (7c, 9c) of said first and second pulleys (7, 9),
wherein said oil pump (17) is arranged on said first shaft (3) between said damper unit (12) and the stationary sheave (7a) of said first pulley (7).

4. A continuously variable transmission according to claim 1, 2 or 3, further comprising a first clutch (C_{L}) interposed between said first shaft (3) and the first rotary member (18) of said synchronous transmission (16) for transmitting/blocking the power,
wherein said first clutch (C_{L}) is arranged on said first shaft (3) at the axial outer side of said first rotary member (18).

5. A transmission according to any of claims 1 to 4,
wherein said synchronous transmission (16) includes: a sprocket constructing said first rotary member (18); a sprocket constructing said second rotary member (20); and a chain (22) made to run on said two sprockets.

6. A transmission according to any of claims 1 to 5,
wherein said planetary gear (19) is a simple planetary gear, and
wherein said first rotary element is a carrier (19c), said second rotary element is a sun gear (19s), and said third rotary element is a ring gear (19r).

7. A continuously variable transmission according to claim 6, further comprising a second clutch (C_{H}) interposed between said sun gear (19s) and said ring gear (19r) for transmitting/blocking the power,
wherein said second clutch (C_{H}) is arranged on said second shaft (4) between said planetary gear (19) and said output gear (21).

8. A transmission according to any of claims 1 to 7,
wherein the hydraulic actuators (7c, 9c) of said first pulley (7) and said second pulley (9) individually have first oil chambers (55, 56) and second oil chambers (57, 59) arranged axially in series for exerting a pushing force on said movable sheaves (7b, 9b).

9. A continuously variable transmission according to claim 8, further comprising:
a differential unit (25);
a third shaft extending from said differential unit and having left and right front axles (5a, 5b); and
a fourth shaft having a counter shaft (6) interposed between said output gear (21) and said differential unit (25),
wherein the lines joining said first, second, third and fourth shafts forms a deformed quadrilateral, as viewed in side elevation, and
wherein said second shaft (4) said fourth shaft (6), said first shaft (3) and said third shaft (5) are arranged consecutively in the recited order downward.

10. A continuously variable transmission according to claim 9,
wherein the boss portion (9a₁) of the stationary sheave (9a) of said second pulley (9) is rotatably supported through a bearing by a case member (33), and
wherein said output gear (21) is rotatably supported on the boss portion (9a₁) of said stationary sheave (9a) through a bearing (40).

## Patentansprüche

1. Stufenlos regelbares Getriebe, das aufweist:
a) ein stufenlos regelbares Riemengetriebe (11) mit einer ersten Riemenscheibe (7), die auf einer ersten Welle (3) angeordnet ist und eine feste Kegelscheibe (7a), eine bewegliche Kegelscheibe (7b) und ein an der Rückseite der beweglichen Kegelscheibe (7b) angeordnetes hydraulisches Stellglied (7c) aufweist; einer zweiten Riemenscheibe (9), die auf einer zweiten Welle (4) angeordnet ist und eine feste Kegelscheibe (9a), eine bewegliche Kegelscheibe (9b) und ein an der Rückseite der beweglichen Kegelscheibe (9b) angeordnetes hydraulisches Stellglied (9c) aufweist; und einem auf der ersten (7) und der zweiten Riemenscheibe (9) laufenden Riemen (10);
b) ein Synchrongetriebe (16) zum Verbinden eines auf der ersten Welle (3) angeordneten ersten Drehelements (18) mit einem auf der zweiten Welle (4) angeordneten zweiten Drehelement (20) in konstantem Übersetzungsverhältnis;
c) ein Abtriebsritzel (21) zur Kraftübertragung auf Räder;
d) ein auf der zweiten Welle (4) angeordnetes Planetengetriebe (19), das zumindest ein erstes, ein zweites und ein drittes Drehelement zum Verbinden des ersten Drehelements (19c) mit dem zweiten Drehelement (20), des zweiten Drehelements (19s) mit der zweiten Riemenscheibe (9) und des dritten Drehelements (19r) mit dem Abtriebsritzel (21) aufweist,
e) wobei die erste Welle (3) über das stufenlos regelbare Riemengetriebe (11) mit dem zweiten Drehelement (19s) und über das Synchrongetriebe (16) mit dem ersten Drehelement (19c) verbunden ist,
f) wobei das hydraulische Stellglied (7c) der ersten Riemenscheibe (7) und das hydraulische Stellglied (9c) der zweiten Riemenscheibe (9) in unterschiedlichen Positionen in Axialrichtung quer zu dem Riemen (10) angeordnet sind,
g) wobei das Planetengetriebe (19) und das Abtriebsritzel (21) auf der zweiten Welle (4) zwischen dem Synchrongetriebe (16) und der zweiten Riemenscheibe (9) so angeordnet sind, daß sie das hydraulische Stellglied (7c) der ersten Riemenscheibe (7) axial überlappen, **dadurch gekennzeichnet, daß**
(h) eine Dämpfereinheit (12) zum Dämpfen der Drehmomentschwankungen eines Motors auf der Motorseite der festen Kegelscheibe (7a) der ersten Riemenscheibe (7) auf der ersten Welle (3) so angeordnet ist, daß sie das hydraulische Stellglied (9c) der zweiten Riemenscheibe (9) axial überlappt.

2. Stufenlos regelbares Getriebe nach Anspruch 1, wobei die Kraft vom Motor über die Dämpfereinheit (12) direkt auf die erste Welle (3) übertragen wird.

3. Stufenlos regelbares Getriebe nach Anspruch 1 oder 2, das ferner eine durch die Kraft vom Motor angetriebene Ölpumpe (17) zum Erzeugen eines Öldrucks aufweist, der an die hydraulischen Stellglieder (7c, 9c) der ersten und zweiten Riemenscheiben (7, 9) angelegt wird,
wobei die Ölpumpe (17) auf der ersten Welle (3) zwischen der Dämpfereinheit (12) und der festen Kegelscheibe (7a) der ersten Riemenscheibe (7) angeordnet ist.

4. Stufenlos regelbares Getriebe nach Anspruch 1, 2 oder 3, das ferner eine zwischen der ersten Welle (3) und dem ersten Drehelement (18) des Synchrongetriebes (16) eingefügte erste Kupplung (C_{L}) zum Übertragen/Blockieren der Kraft aufweist,
wobei die erste Kupplung (C_{L}) auf der ersten Welle (3) an der axial äußeren Seite des ersten Drehelements (18) angeordnet ist.

5. Getriebe nach einem der Ansprüche 1 bis 4, wobei das Synchrongetriebe (16) aufweist: ein Kettenrad, welches das erste Drehelement (18) bildet; ein Kettenrad, welches das zweite Drehelement (20) bildet; und eine auf den beiden Kettenrädern laufende Kette (22).

6. Getriebe nach einem der Ansprüche 1 bis 5,
wobei das Planetengetriebe (19) ein einfaches Planetengetriebe ist, und
wobei das erste Drehelement ein Träger (19c), das zweite Drehelement ein Sonnenrad (19s) und das dritte Drehelement ein Hohlrad (19r) ist.

7. Stufenlos regelbares Getriebe nach Anspruch 6, das ferner eine zwischen dem Sonnenrad (19s) und dem Hohlrad (19r) eingefügte zweite Kupplung (C_{H}) zur Kraftübertragung/blockierung aufweist,
wobei die zweite Kupplung (C_{H}) auf der zweiten Welle (4) zwischen dem Planetengetriebe (19) und dem Abtriebsritzel (21) eingefügt ist.

8. Getriebe nach einem der Ansprüche 1 bis 7,
wobei die hydraulischen Stellglieder (7c, 9c) der ersten Riemenscheibe (7) und der zweiten Riemenscheibe (9) jeweils eine erste Öldruckkammer (55, 56) und eine zweite Öldruckkammer (57, 59) aufweisen, die axial hintereinander angeordnet sind, um eine Schubkraft auf die beweglichen Kegelscheiben (7b, 9b) auszuüben.

9. Stufenlos regelbares Getriebe nach Anspruch 8, das ferner aufweist:
eine Differentialeinheit (25);
eine von der Differentialeinheit ausgehende dritte Welle mit einer linken und einer rechten Vorderachse (5a, 5b);
und eine vierte Welle mit einer Vorgelegewelle (6), die zwischen dem Abtriebsritzel (21) und der Differentialeinheit (25) eingefügt ist,
wobei die Verbindungslinien zwischen der ersten, zweiten, dritten und vierten Welle, im Seitenriß gesehen, ein verzerrtes Viereck bilden, und
wobei die zweite Welle (4), die vierte Welle (6), die erste Welle (3) und die dritte Welle (5) in der angegebenen Reihenfolge von oben nach unten angeordnet sind.

10. Stufenlos regelbares Getriebe nach Anspruch 9,
wobei der Nabenabschnitt (9a₁) der festen Kegelscheibe (9a) der zweiten Riemenscheibe (9) über ein Lager durch ein Gehäuseelement (33) drehbar gelagert ist, und
wobei das Abtriebsritzel (21) über ein Lager (40) auf dem Nabenabschnitt (9a₁) der festen Kegelscheibe (9a) drehbar gelagert ist.

## Revendications

1. Transmission variable en continu comprenant :
a) une transmission variable en continu du type à courroie (11) comprenant : une première poulie (7) disposée sur un premier arbre (3) et comportant une poulie fixe (7a), une poulie mobile (7b) et un vérin hydraulique (7c) disposé à l'arrière de ladite poulie mobile (7b) ; une deuxième poulie (9) disposée sur un deuxième arbre (4) et comportant une poulie fixe (9a), une poulie mobile (9b) et un vérin hydraulique (9c) disposé à l'arrière de ladite poulie mobile (9b) ; et une courroie (10) qui est disposée de façon à passer sur lesdites première (7) et deuxième (9) poulies ;
b) une transmission synchrone (16) pour relier un premier élément rotatif (18) disposé sur ledit premier arbre (3) et un deuxième élément rotatif (20) disposé sur ledit deuxième arbre (4) sous un rapport de vitesse constant ;
c) un engrenage de sortie (21) pour transmettre une puissance à des roues ;
d) un engrenage planétaire (19) disposé sur ledit deuxième arbre (4) et comprenant au moins des premier, deuxième et troisième éléments rotatifs pour relier ledit premier élément rotatif (19c) audit deuxième élément rotatif (20), ledit deuxième élément rotatif (19s) à ladite deuxième poulie (9), et ledit troisième élément rotatif (19r) audit engrenage de sortie (21),
e) dans laquelle ledit premier arbre (3) est relié, par l'intermédiaire de ladite transmission variable en continu du type à courroie (11), audit deuxième élément rotatif (19s), et, par l'intermédiaire de ladite transmission synchrone (16), audit premier élément rotatif (19c),
f) dans laquelle le vérin hydraulique (7c) de ladite première poulie (7) et le vérin hydraulique (9c) de ladite deuxième poulie (9) sont agencés dans des positions différentes de la direction axiale de part et d'autre de ladite courroie (10),
g) dans laquelle ledit engrenage planétaire (19) et ledit engrenage de sortie (21) sont agencés sur ledit deuxième arbre (4) entre ladite transmission synchrone (16) et ladite deuxième poulie (9) pour chevaucher axialement le vérin hydraulique (7c) de ladite première poulie (7), **caractérisée en que** :
h) une unité d'amortisseur (12) pour absorber la fluctuation du couple d'un moteur est disposée du côté du moteur de la poulie fixe (7a) de ladite première poulie (7) sur ledit premier arbre (3) de façon à chevaucher axialement le vérin hydraulique (9c) de ladite deuxième poulie (9).

2. Transmission variable en continu selon la revendication 1, dans laquelle la puissance dudit moteur est entrée directement sur ledit premier arbre (3) par l'intermédiaire de ladite unité d'amortisseur (12).

3. Transmission variable en continu selon la revendication 1 ou 2, comprenant de plus une pompe à huile (17) actionnée par la puissance dudit moteur pour produire une pression d'huile destinée à être délivrée aux vérins hydrauliques (7c, 9c) desdites première et deuxième poulies (7, 9),
dans laquelle ladite pompe à huile (17) est disposée sur ledit premier arbre (3) entre ladite unité d'amortisseur (12) et la poulie fixe (7a) de ladite première poulie (7).

4. Transmission variable en continu selon la revendication 1, 2 ou 3, comprenant de plus un premier embrayage (C_{L}) interposé entre ledit premier arbre (3) et le premier élément rotatif (18) de ladite transmission synchrone (16) pour transmettre/interrompre la puissance,
dans laquelle ledit premier embrayage (C_{L}) est disposé sur ledit premier arbre (3) du côté extérieur axial dudit premier élément rotatif (18).

5. Transmission selon l'une quelconque des revendication 1 à 4,
dans laquelle ladite transmission synchrone (16) comprend : un pignon constituant ledit premier élément rotatif (18) ; un pignon constituant ledit deuxième élément rotatif (20) ; et une chaîne (22) disposée de façon à passer sur lesdits deux pignons.

6. Transmission selon l'une quelconque des revendication 1 à 5,
dans laquelle ledit engrenage planétaire (19) est un engrenage planétaire simple, et
dans laquelle ledit premier élément rotatif est un porteur (19c), ledit deuxième élément rotatif est une roue solaire (19s), et ledit troisième élément rotatif est une couronne de train planétaire (19r).

7. Transmission variable en continu selon la revendication 6, comprenant de plus un deuxième embrayage (C_{H}) interposé entre ladite roue solaire (19s) et ladite couronne de train planétaire (19r) pour transmettre/interrompre la puissance,
dans laquelle ledit deuxième embrayage (C_{H}) est disposé sur ledit deuxième arbre (4) entre ledit engrenage planétaire (19) et ledit engrenage de sortie (21).

8. Transmission selon l'une quelconque des revendication 1 à 7,
dans laquelle les vérins hydrauliques (7c, 9c) de ladite première poulie (7) et de ladite deuxième poulie (9) comportent individuellement des premières chambres d'huile (55, 56) et des deuxièmes chambres d'huile (57, 59) disposées axialement en série pour exercer une force de poussée sur lesdites poulies mobiles (7b, 9b).

9. Transmission variable en continu selon la revendication 8, comprenant de plus :
une unité de différentiel (25) ;
un troisième arbre s'étendant à partir de ladite unité de différentiel et comportant des axes avant gauche et droit (5a, 5b) ; et
un quatrième arbre comportant un contre-arbre (6) interposé entre ledit engrenage de sortie (21) et ladite unité de différentiel (25),
dans laquelle les lignes réunissant lesdits premier, deuxième, troisième et quatrième arbres forment un quadrilatère déformé, vu en élévation latérale, et
dans laquelle ledit deuxième arbre (4), ledit quatrième arbre (6), ledit premier arbre (3) et ledit troisième arbre (5) sont disposés successivement dans l'ordre indiqué vers le bas.

10. Transmission variable en continu selon la revendication 9,
dans laquelle la partie de protubérance (9a₁) de la poulie fixe (9a) de ladite deuxième poulie (9) est supportée de façon à pouvoir tourner par l'intermédiaire d'un palier par un élément de boîtier (33), et
dans laquelle ledit engrenage de sortie (21) est supporté de façon à pouvoir tourner sur la partie de protubérance (9a₁) de ladite poulie fixe (9a) par l'intermédiaire d'un palier (40).
